# EUROPEAN PATENT APPLICATION

(11) **EP 2 166 039 A1**
(43) Date of publication of application: **24.03.2010**
(21) Application number: 08305572.3
(22) Date of filing: 19.09.2008
(51) Int. Cl.: C08L 95/00, E01C 19/10

(54) **Preparation process of asphalt mixtures**

(71) Applicant: CECA S.A., 92250 La Garenne Colombes (FR)
(72) Inventor: Barreto, Gilles, 69510 Messimy (FR); Gonzalez Leon, Juan Antonio, 69008 Lyon (FR)
(74) Representative: Lhoste, Catherine

(57) **Abstract**

This invention relates to the production of asphalt mixtures by a specific preparation process consisting in using a bituminous composition that has been stored for a given period of time, said bituminous composition comprising at least one bitumen and at least one additive that allows asphalt mixture production at reduced temperatures. The process of the present invention significantly enhances the performance of such additives, making the asphalt mixture easier to lay off and compact.

The invention also relates to applications for the production of asphalts mixtures with mineral aggregates used in waterproofing, construction or maintenance of sidewalks, roads, highways, parking lots or airport runaways and service roads as well as any rolling surfaces.

## Description

### Field of invention

This invention relates to the production of asphalt mixtures by a specific preparation process. The process described in this invention consists in the use of a bituminous composition that has been stored for a given period of time, said bituminous composition consisting in a bitumen and at least one additive that allows asphalt mixtures production at reduced temperatures. Examples of applications for the present invention are the production of asphalts mixtures with mineral aggregates used in waterproofing, construction or maintenance of sidewalks, roads, highways, parking lots or airport runaways and service roads and any other rolling surfaces.

### Background

Bitumen or asphalt is the heaviest portion from the oil distillation process. Due to the different origins and distillation processes of such oils, the resulting bitumen may have a wide range of properties and characteristics. In the present invention, bitumen refers not only to the product from oil by direct distillation or from distillation of oil at reduced pressures, but also to the product resulting from the extraction of tar and bituminous sands, the product of oxidation and/or fluxation of such bituminous materials, as well as blown or semi-blown bitumens, synthetic bitumens (such as described in FR 2 853 647-A1), tars, oil resins or indene-coumarone resins mixed with aromatic and/or paraffinic hydrocarbons and mixtures thereof.

The main application for bitumen is in asphalt mixtures where the bitumen is mixed with mineral aggregates that can be of different size, shape and chemical nature. These asphalt mixtures are particularly used for waterproofing, construction or maintenance of sidewalks, roads, highways, parking lots or airport runaways and service roads and any other rolling surfaces. In the present invention mineral aggregates may be for example, and in a non limitative way, the products from quarries as well as aggregates recuperated from previous asphalt mixtures (as described in the French Normalized Procedure NF EN 13108-8, March 2006), products from building demolition and their mixtures. Other common components in asphalt mixtures are organic and inorganic fibers, such as glass, metal or carbon fibers, as well as, cellulose, cotton, polypropylene, polyester, polyvinyl alcohol, polyamide fibers, and the like.

The mixing process for the production of asphalt mixtures using the composition described in this invention, can take place by different methods that may be grouped into three main categories based on their production temperatures: processes at room temperature, processes at temperatures between room and 100°C, and processes with a production temperature above 100°C.

The asphalt mixture production processes taking place at room temperature, depend on methods that provide enough fluidity to the bitumen at such temperatures. One of such methods can be, for example, the one based on the addition of volatile solvents to the bitumen. This would allow the proper coverage of the aggregates by the solubilized bitumen at room temperature, and its proper laying and compaction. However, large quantities of volatile solvents are required which pollutes the atmosphere when evaporated. This technique has pretty much vanished since the use of volatile solvents can be avoided by the use of other techniques. Another process that allows the production of an asphalt mixture at room temperature conditions is the one that uses an emulsion or dispersion of bitumen in water as a mean to make it fluid. The asphalt mixtures fabricated by this process have the advantage that no thermal treatment is required for the aggregates and practically no polluting emissions are generated. This process can be combined with the technique mentioned above which uses volatile solvents added into the bitumen prior to the emulsification or dispersion. Nevertheless, the mechanical properties obtained by this method are, in general, lower that the ones obtained by hot mixing methods, where the aggregates are used dried after a thermal treatment above 100°C. Bitumen emulsions and dispersions are commonly used for example to produce grave emulsion, storable cold mixes, cold wearing courses like micro-surfacing or like the ones produced with pugmills, transported with haul trucks and compacted with rollers and to waterproof surfaces.

Recently, there have been several developments for asphalt mixture production at temperatures above room temperature but below 100°C. Examples of such processes are: the use of two different types of bitumen during production (as in WO 1997/20890), the introduction of a fraction of cold and wet aggregates during the mixing stage to create a fluid bitumen foam (as in EP 1 469 038 and EP 1 712 680), or the use of a bitumen/water emulsion to also produce a foam during mixing to achieve the aggregate covering (as in WO 2007/112335). These processes have several advantages, in particular on the reduction of energy consumed and polluting emissions generated, but they require substantial modification to the standard asphalt hot mixing equipment.

The most commonly used method for the production of asphalt mixtures is the one that takes place at temperatures above 100°C. At these temperatures, the bitumen can be fluid enough to properly cover the aggregate that is, in contrast to the previous methods at room temperature, dried during the heating process. The obtained hot asphalt mixtures have also to be laid and compacted at elevated temperature to guarantee their fluidity. The temperature at which the aggregates are heated is chosen to obtain proper evaporation of their moisture and to ensure an adequate production temperature for the used bitumen. The production temperature is set mainly by the viscosity of the utilized bitumen, the more viscous the bitumen the higher the production temperature. For example, in France, an asphalt mixture using bitumen with a penetration of 35/50 is generally fabricated at a temperature of 150°C to 190°C (as described in NF EN 13108-1, February 2007). This hot asphalt mix process is widely used due to its simplicity and robustness, since the main parameter to control is the production temperature. However, a substantial amount of heat goes to the heating and drying of the mineral aggregates (∼ 90-96 wt% of asphalt mixture), which makes this an energetically expensive process that also releases a significant amount of undesired emissions.

Other techniques exist and are known to those skilled in the art, like tack coat, cheap seal, surface dressing employing anhydrous bituminous binder or bitumen emulsions. The anhydrous bituminous binder or bitumen emulsion has to achieve cohesion very fast once sprayed over the surface to be treated so that the aggregates are not expelled upon mechanical action. One conventional solution is to use a volatile solvent mixed with the bitumen so that the solvent evaporation enables a cohesion increase. This is no longer seen as a long-term solution because of the related organic emissions. FR 2 768 150 proposes to use, mixed with bitumen, a non-volatile solvent that chemically reacts in contact with the oxygen of the air to get the right bitumen cohesion. But the cohesion-augmentation kinetics remains difficult to control and in one option a metallic catalyst is used.

Lately, there has been a lot of interest in reducing the production temperature of hot mix asphalts, while remaining at production temperatures above 100°C. Such interest in reducing the production temperatures of asphalt mixtures is not just driven by the energy savings and reduction of polluting emissions; it is also driven by the possibility to increase the asphalt mixture hauling time and the extension of the working season. Several solutions have been proposed, which consist in the addition of some kind of additives.

In US 6 588 974, paraffins are added to the bitumen in order to obtain an acceptable viscosity for covering the mineral aggregate at a reduced temperature. The claimed reduction in temperature is in the order of 30°C. The paraffins used act as a solvent for the bitumen, decreasing its viscosity. At the same time, the use of paraffins enhances some of the mechanical properties of the asphalt mixture, such as the rutting resistance. However, the addition of paraffins might change the classification of the bitumen and, in some cases, it will exceed the allowed total content of paraffins in the bitumen. In addition, there is a significant risk of degradation of the low temperature behavior of the asphalt mixture carried out with such paraffins. The added paraffins can increase the fragility of the asphalt mix, having lower fracture energy. Another possible concern of this technique is that if the compaction of the asphalt mix takes place at a temperature that is lower than the crystallization temperature of the paraffins, the compaction is less efficient (more energy for the same level of compaction is required).

US 4 371 400 describes the use of a zeolite for enhancing the fluidity of the asphalt mix during processing while improving the resistance to break at 22°C and 40°C.

In US 2004/0033308 and US 2005/0076810 the use of a zeolite, particularly the use of a zeolite A, in the production of hot mix asphalt is described. The use of such zeolites allows for a production temperature reduction of 30°C while keeping a normal operation of the production plant. However, this process is not exempt of issues. Such process needs a storing silo and an adding system for the zeolites. In addition, the use of at least 0.2% of zeolite, relative to the mineral aggregates in the asphalt mix, may become a significant supplementary cost.

WO 2005/100480 describes the use of paraffins in combination with zeolites for the production of asphalt mixtures at reduced temperatures. Such process would not solve the issues with storage and solid addition of zeolites to the asphalt mixture, and would add the extra cost of the paraffins.

In WO 2006/106222 different types of additives for the production of asphalt mixtures at reduced temperatures are described. The claimed additives do not change the classification of bitumen (penetration and ring and ball temperatures remain practically unchanged). Actual field test are used as examples, showing that a reduction of 40°C in the production and in the compaction of the asphalt mixture is possible, while achieving a good compaction level. The described additives are easy and simple to mix into the bitumen. However, no remark is mentioned about a specific time of additive addition into the bitumen before the asphalt mixture production process.

WO 2007/141458 also describes additives for the reduction of the production temperature of asphalt mixtures. In this case, reductions of 40°C in the production temperature and up to 55°C in the compaction are claimed while achieving road porosities within the requirements of the French norms. The additives described in this work do not practically change either the penetration or the ring and ball temperature. This work described that the additives can be added at any point of the bitumen logistic chain. However, it mentions a minimum mixing time of 15 minutes in the storing tank before adding the bitumen/additive composition into the mixing unit with the mineral aggregates

Several advantages result from the reduction of production temperature, as described in many of the works cited above. These advantages include, among others:
- Reduction of the fuel used in the production process.
- Reduction of polluting emissions, related to the fuel consumed and the lower temperature of the asphalt mixture.
- Improving of the workers conditions during the laying off and compaction operations.
- Better joint sealing between lanes posed at different times.
- Decreasing of the bitumen oxidation during production of the asphalt mixture, extending the pavement life.

In addition, the ability to lay off and compact an asphalt mix at lower temperatures can compensate for the supplementary cooling encountered when the hauling time is longer or/and when the weather conditions are cooler.

In the previous work cited here to reduce the production temperature of an asphalt mixture, no specific attention has been given to the time the additive is in contact with the bitumen and how it relates to its final performance in asphalt mix production.

### Summary of the invention

The invention relates to a preparation process for asphalt mixtures with enhanced workability at production and compaction conditions. The process according to the invention improves the effectiveness of an additive that allows the production of asphalt mixtures at reduced temperatures or the production of asphalt mixtures at standard temperatures associated with longer hauling times and/or cooler atmospheric conditions for the laying off and compaction. Such improvements are achieved by the storage of the bituminous composition, which comprises at least one additive, over a period of time ranging from a few or several days to several weeks.

The improvement can be seen on the workability of the asphalt mixture at a reduced temperature, resulting in a more effective compaction, improving the final mechanical properties of the asphalt mixture. Another aspect of the invention is to further reduce the production and compaction temperatures of an asphalt mixture, compared to a non-stored bituminous composition containing the same additive, while achieving the same final performance. These improvements are surprising because they oppose to the state of the art experience. It is known to those skilled in the art that the standard additives have a deteriorating performance when the asphalt is stored with the additive for several days, for example with anti-stripping agents and polymers.

### Detailed description of the invention

According to a first aspect, it is the matter of this invention a preparation process of asphalt mixtures comprising at least the steps of:
(1) preparing a bituminous composition by the addition to at least one bitumen of at least one additive, hereafter referred as additive ADD1, at a temperature of between 100 and 260°C, preferably between 100 and 200°C;
(2) storing said bituminous composition at a standard temperature according to the class of bitumen (as described for example in NF EN 13108-1, February 2007 or Asphalt binder testing manual, Asphalt Institute 2007) for a period of time longer than 2 days, preferably between 3 and 30 days, and more preferably between 7 and 30 days;
(3) optionally adding at least another additive ADD2, to the stored bituminous composition from step (2);
(4) optionally further storing the resulting bituminous composition from step (3) for less than 15 days, preferably 7 days, more preferably less than 3 days;
(5) mixing the obtained bituminous composition of step (4) with mineral aggregates to produce an asphalt mixture.

By "standard temperature" in step (2) above is meant a temperature generally ranging from 100°C to 260°C, preferably 100 to 200°C. As indicated above, this standard temperature depends on the nature of the bitumen, as is well known to the skilled in the art. For example NF EN 13108-1 of February 2007 indicates the following temperature ranges:
- 160°C to 200°C for bitumen type 20/30;
- 155°C to 195°C for bitumen type 30/45;
- 150°C to 190°C for bitumen type 35/50 or 40/60;
- 140°C to 180°C for bitumen type 50/70 or 70/100;
- 130°C to 170°C for bitumen type 100/150 or 160/220; and
- 120°C to 160°C for bitumen type 250/330 or 330/430.

Such temperatures are given as illustrative purpose only. It should be understood that these temperatures may be adapted when modified bitumens are used.
It should also be noted that the process of the present invention is applicable whatever the storing temperature within the hereinbefore described temperature ranges, provided that the bitumen comprising at least one additive ADD1 is stored for a period of time longer than 2 days, preferably between 3 and 30 days, and more preferably between 7 and 30 days.

By bitumen in the present invention is meant a bituminous material resulting from the distillation of oil under atmospheric or reduced pressure, the product resulting from the extraction of tar and bituminous sands, the product of oxidation and/or fluxation of such bituminous materials, as well as blown or semi-blown bitumens, synthetic bitumens (such as described in FR 2 853 647), tars, oil resins or indene-coumarone resins mixed with aromatic and/or paraffinic hydrocarbons and the mixtures of such.

Additives ADD1 may be any kind of additives know in the art, and preferably those which are commonly used for the reduction of asphalt mixture production temperature, the reduction of laying and compaction temperatures and/or the increase of the asphalt mix hauling time. Additives ADD1 may be known for their adhesion enhancing properties (adhesion agents), however such additives are not used in step 1 because of their adhesion enhancing properties.
In a preferred embodiment of the invention one or more additive(s) ADD1 present in the bituminous composition of step (1) is(are) advantageously chosen from among one or more of the following additives:
- A) an additive containing at least a component A1 of formula: 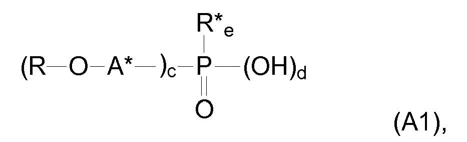 where P represents phosphorus, c is 1 or 2, e is 0 or 1, c + d + e is 3, provided that when c is 2, then e is 0, R* is hydrogen or linear or branched C₁-C₆ alkyl, A* represents a bond or a divalent group containing at least a propylene oxide repeating unit (PO) and/or a ethylene oxide repeating unit (EO) and R is a linear, branched, saturated or unsaturated C₁-C₃₀ hydrocarbon chain, optionally containing at least one aromatic cycle; the content of additive(s) A1 being comprised between 0.3 kg and 20 kg per ton (1,000 kg) of bituminous composition; Additive A may optionally contain phosphoric acid, where its content per ton of bituminous composition is preferably below 2 kg; Additive A may optionally contain at least a pyrophosphate of component A1 the content of which being preferably below 20 kg per ton of bituminous composition; Preferably, A* represents a divalent group containing propylene oxide (PO) and/or ethylene oxide (EO) repeating units, generally statistically arranged or in blocks, more preferably in blocks. Even more preferably, A* represents a divalent group containing propylene oxide (PO) and/or ethylene oxide (EO) repeating units, where such PO and/or EO repeating units are bonded to the phosphorus atom by a single bond or by a linear or branched hydrocarbon chain with, preferably, one, two or three carbon atoms. Preferably, the PO and/or EO repeating units are directly bonded to the phosphorus atom (single bond), the oxygen atoms of OP or OE repeating units are bonded to the phosphorus atom. Preferably, A* represents the repeating unit -(CH₂CH(CH₃)O)ₐ-(CH₂CH₂O)_{b}-, where b is between 0 to 10, and a comprised between 0 and 80, preferably between 8 and 80, and more preferably between 20 and 60. In this case, A1 can be drawn as: 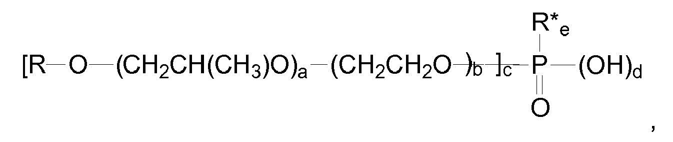 where R, R*, a ,b, c, d and e are as described above. Additionally, when the PO and/or EO repeating units are bonded to the phosphorus atom by the hydrocarbon chain, component A1 can advantageously be described by the following formula: 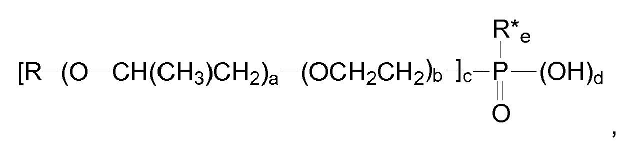 where R, R*, a ,b, c, d and e are as described above; preferably, a represents 0, when R contains at least 10 carbon atoms and a is comprised between 8 and 80, preferably between 20 and 60, when R contains less than 10 carbon atoms. In the A1 formula, A* may also represent a single bond, and in this case, A1 can be drawn as: 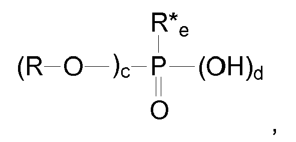 where R, R*, c, d and e are as described above;
- B) the reaction product(s) of (di)alk(en)ylphenol(s) with aldehyde(s), said aldehyde(s) having from 1 to 10 carbon atoms (C₁-C₁₀), and more particularly from 1 to 5 carbon atoms (C₁-C₅), and even more particularly paraformaldehyde or acetaldehyde, followed with (poly)oxyethylation and/or (poly)oxypropylation, the alk(en)yl groups having from 1 to 50 carbon atoms (C₁-C₅₀), preferably from 2 to 20 carbon atoms (C₂-C₂₀), and more preferably from 3 to 12 carbon atoms (C₃-C₁₂), the dialk(en)ylphenols possibly being identical or different, the unit resulting from (poly)oxyethylation and/or (poly)oxypropylation having a molecular weight equal to or greater than 45 g/mol and less than 20,000 g/mol, the number of phenolic units in the reaction product B) ranging from 3 to 50;
- C) (poly)oxyethylated and/or (poly)oxypropylated 2,2-bis(4-hydroxyphenyl) propane-epichlorohydrine copolymer(s), the unit resulting from (poly)oxyethylation and/or (poly)oxypropylation having a molecular weight equal to or greater than 45 g/mol and less than 20,000 g/mol;
- D) (poly)oxyethylated and/or (poly)oxypropylated bis(4-hydroxyphenyl)ethane-epichlorohydrine copolymer(s), the unit resulting from (poly)oxyethylation and/or (poly)oxypropylation having a molecular weight equal to or greater than 45 g/mol and less than 20,000 g/mol;
- E) (poly)oxyethylated and/or (poly)oxypropylated bis(4-hydroxyphenyl) methane-epichlorohydrine copolymer, the unit resulting from (poly)oxyethylation and/or (poly)oxypropylation having a molecular weight equal to or greater than 45 g/mol and less than 20,000 g/mol;
- F) the reaction product of (poly)oxyethylation and/or (poly)oxypropylation of an alkyldicarboxylic acid or mixtures thereof, the alkyl groups having from 1 and 20 carbon atoms, preferably from 1 to 10 carbon atoms, all the units resulting from (poly)oxyethylation and/or (poly)oxypropylation having a molecular weight equal to or greater than 100 g/mol and less than 20,000 g/mol;
- G) the reaction product of (poly)oxyethylation and/or (poly)oxypropylation of a fatty acid, the number of carbon atoms of which ranging from 10 and 30, said fatty acid being preferably tall oil fatty acid, the unit resulting from (poly)oxyethylation and/or (poly)oxypropylation having a molecular weight equal to or greater than 100 g/mol and less than 20,000 g/mol;
- H) the reaction product of product B) with a mixture of products F) and G);
- I) a salt from an alk(en)yl(aryl) sulfonic acid(s) and an alk(en)yl(aryl)amine(s), the alk(en)yl(aryl) units having a number of carbon atoms ranging from 6 to 30, said salt preferably being the salt of dodecyl benzene sulfonic acid with tallow amine, or the salt of dodecyl benzene sulfonic acid with cyclohexyl amine;
- J) a salt from an alk(en)yl(aryl) sulfonic acid(s) and heterocyclic compound(s), such as those chosen from among morpholine, pyrazine, pyrazoline, pyrazolone, pyridine, pyridine, pyrimidine, pyrrole, pyrrolidine, pyrolidone, pyrroline, toluidine, imidazole, indol, indoline or oxindole, the alk(en)yl(aryl) groups having from 6 to 30 carbon atoms, said salt preferably being the salt of dodecyl benzene sulfonic acid with morpholine;
- K) the statistical or block copolymer(s) of ethylene oxide and propylene oxide with a molecular weight between 500 g/mol and 20,000 g/mol and their mixtures, with a mass ratio (ethylene oxide / copolymer) between 1% and 70%;
- L) a compound of formula: R°-CO-O-(CH₂)₂-N⁺(R₁R₂R₃), X⁻
   where R° is a saturated or unsaturated, linear or branched, eventually hydroxylated C₄-C₃₂, preferably C₇-C₂₁ hydrocarbon radical; R₁, R₂, and R₃ are C₁-C₄ alkyl radicals, and X represents halogen (bromine (Br), chlorine (Cl), fluorine (F) or iodine (I) atom) or mesyl (CH₃SO₃⁻⁻); compound L) is preferably obtained by a process where a fatty acid of formula R°-CO-OH, wherein R° is as defined above, is reacted with a quaternary ammonium compound of formula HO-(CH₂)₂-N⁺(R₁R₂R₃), Cl⁻ where R₁, R₂ and R₃ are as defined above, in the presence of a strong acid of formula HX, X being as previously defined. Preferably, R° is obtained from fatty acids from vegetal natural oils, according to well-known procedures. Examples of such natural oils that may advantageously provide fatty acids to prepare compound L) are, by way of non limiting examples, chosen from among rapeseed oil, sunflower oil, soy oil, linseed oil, copra oil, palm oil castor oil and their mixtures. Preferably, R° is a chain from fatty acids chosen from the oleic acid, lauric acid, palmitic acid, ricinoleic acid, linoleic acid and their mixtures, preferably R° is obtained from oleic acid. The quaternary ammonium compound is more preferably choline chloride of HO-(CH₂)₂-N⁺(CH₃)₃Cl⁻, the strong acid used in the reaction described above being preferably methane sulfonic acid. A particularly preferred form of the additive L) is the 9-octadecenoate choline mesylate, obtained from choline chloride, methane sulfonic acid and oleic acid according to the following scheme:

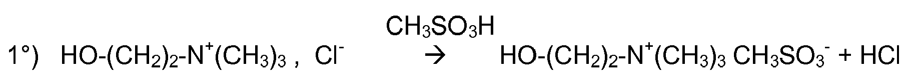

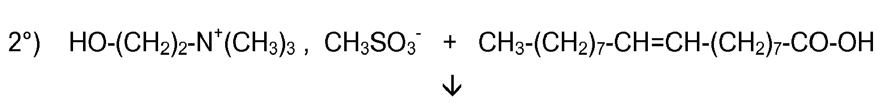

   CH₃-(CH₂)₇-CH=CH-(CH₂)₇-CO-O-(CH₂)₂-N⁺(CH₃)₃ (CH₃SO₃⁻) + H₂O

   resulting in an additive composition comprising: i) 50 to 100 wt% of the 9-octadecenoate choline mesylate; ii) 0 to 15 wt% of methyl sulfonic acid; iii) 0 to 40 wt% of residual oleic acid; iv) 0 to 40wt % of residual mesylate chloride, where i) + ii) + iii) + iv) adds to 100 wt% of the additive composition.
- M) a composition of choline bi- and/or tri-esters, non-limiting examples being the reaction products of choline with a n-alkyl chain having with 51 carbon atoms or 19 carbon atoms over a trimer acid-based compound having 54 carbon atoms (M1) or a carboxylic triacid-based compound having 22 carbon atoms(M2). More examples of such components are the di-esters reaction products of choline bearing a C₃₄ (M3) or C₁₉ (M4) alkyl chain, over a C₃₆ dimer acid-based compound or a C₂₁ carboxylic diacid. 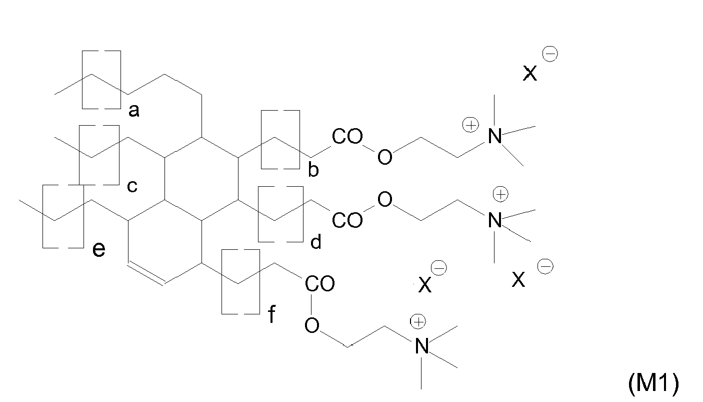 wherein a + b + c + d + e + f = 30 and X = halogen or mesyl; 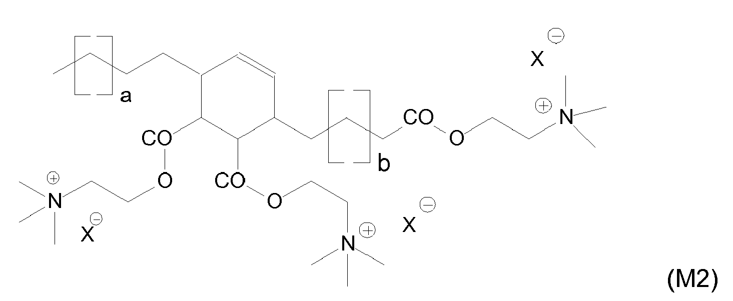 wherein a + b = 8 and X = halogen or mesyl; 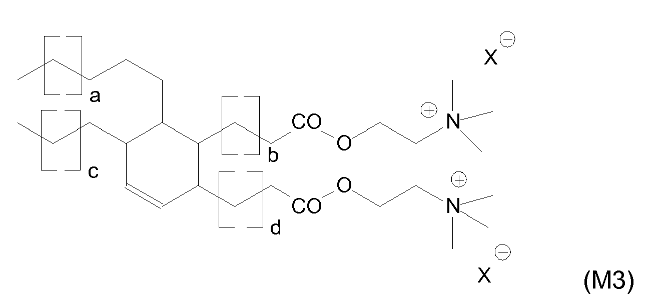 wherein a + b + c + d = 20 and X = halogen or mesyl; 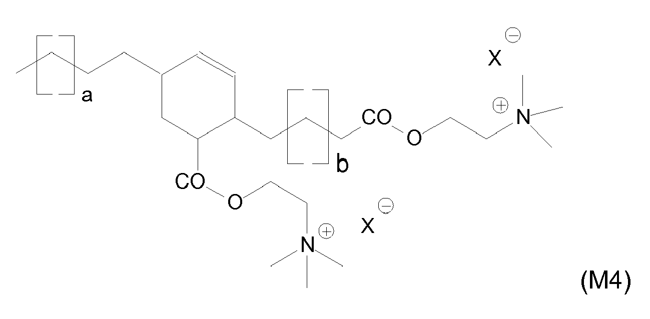 wherein a + b = 8 and X = halogen or mesyl,
   and
- N) a compound of formula: R"-O-A"-CO-CH₂-N⁺(R¹R²R³), X- where R" is a C₆-C₄₀, preferably C₁₀-C₃₆, saturated or unsaturated, linear or branched, optionally hydroxylated, hydrocarbon chain; A" represents a divalent radical comprising and preferably consisting of m ethylene oxy -(CH₂-CH₂-O)ₘ- and/or m propylene oxy -(CH₂-CH(CH₃)-O)ₘ- repeating groups, more preferably m ethylene oxy groups, with 1 ≤ m ≤ 30, even more preferably with 1 < m < 30; R¹, R² and R³, identical of different, each represents C₁-C₄ alkyl, and X represents halogen or mesyl; preferably, compound (N) fulfills one or more, more preferably all of the following conditions: R" is a linear C₁₀-C₃₆, preferably C₁₀-C₃₂ hydrocarbon chain; A" represent a divalent radical of 1 to 30 ethoxy repeating groups -(CH₂-CH₂-O)-; R¹, R² and R³, each represents methyl, and X represents mesyl, the compound (N) is preferably obtained by a process where an ethoxylated and/or propoxylated alcohol with a formula, R"-O-A"-H, where R" and A" are as defined above, is reacted with the salt of a betain halide, for example betain chloride, or with a betain mesylate (for example glycine betain of the following formula: HO-CO-CH₂-N⁺(R¹R²R³), CH₃SO₃⁻ where R¹, R² and R³ are as defined above, in the presence of an acid HX, where X is halogen or mesyl.

All these hereinbefore described additives ADD1 may be added to the bituminous composition of step (1) of this invention in the solid, liquid or dispersed form by any known means. Generally, and unless otherwise specified, the amount of the additive(s) ADD1 in the bituminous composition of step (1) of the present invention ranges from 0.01% to 20% by weight, preferably from 0.02% to 10% by weight, more preferably from 0.05% to 1% by weight to the total mass of the bituminous composition.

The bituminous composition used in the process of the present invention may comprise one or several other additives ADD2, such as those commonly used in the field of bitumen and asphalts These may include anti-stripping agents, generally anionic, cationic, zwitterionic or amphoteric surfactants. Non-limiting examples of such anti-stripping agents are: phosphated surfactants, sulfonated surfactants, alkyl carboxylic acids, fatty acid esters of quaternary alkanol amines, alkyl amido polyamines, alkyl imidazolines and alkyl imidazo polyamines, the products from the reaction between polyamines and fatty carboxylic acids, the products from the reaction between alkyl polyamines and fatty carboxylic acids, and in a similar manner, the products from the reaction between fatty acids or vegetal oil and diethanolamine, followed by the reaction with polyamines. Non-limiting examples of quaternary alkanol amines are betain salts and N,N,N-trialkyl choline salts with strong organic or inorganic acids, such as for example (methane)sulfonic acid. The polyamines are, as non-limiting examples, dimethyl amino propylamine, N-amino ethyl piperazine, diethylene triamine, triethylene tetramine and tetraethylene pentamine.

The amount of additive ADD2 is generally of between 0.01 % and 20% by weight to the total mass of the bituminous composition. The additive(s) ADD2 can also be identical to additive(s) ADD1.

According to another preferred embodiment of the present invention, the bituminous compositions described herein may also comprise at least one component (SP) capable of forming a supramolecular assembly, resulting among other effects, to the enhancement of the mechanical behavior of the bituminous compositions and of the asphalt mixture. Such components capable of forming a supramolecular assembly may be added before or after step (1) of the present invention. At least one of the components capable of forming a supramolecular assembly is, by way of non-limiting examples, the result from the reaction between:
(i)a, a functional group with the formula (1*) to (4*) 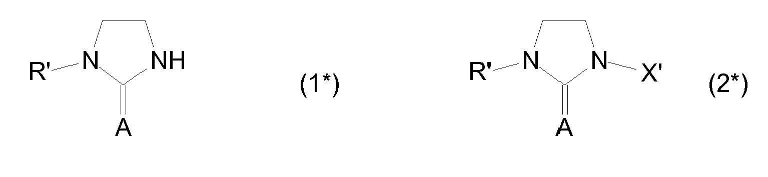 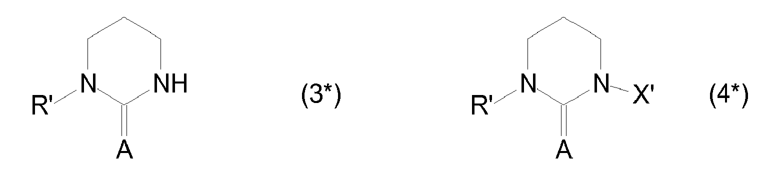 wherein
   A is chosen from oxygen, sulfur or NH, preferably oxygen;
   X' represents a hydrocarbon group, preferably a substituted or non-substituted, linear or branched alkyl chain;
   R' represents a group containing a primary amine, secondary amine or hydroxyl functional group;
   or
(i)b, a functional group with formula (5*) or (6*) 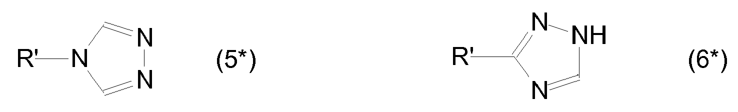 wherein
   R' represents a group containing a primary amine, secondary amine or hydroxyl functional group,
   with
(ii) at least one fatty acid monomer comprising at least one reactive group, and/or one identical or different fatty acid dimer and/or one identical or different fatty acid trimer or a derivate of a fatty acid such as a fatty acid ester or fatty acid chloride.

Preferably, the bituminous composition of the present invention comprises at least one component capable of forming a supramolecular assembly, which is a supramolecular polymer obtained from the reaction between 2-amino ethyl imidazolidin-2-one (herein called UDETA) and/or 3-amino-1,2,4-triazole, and a mixture of:
- 51 to 100 weight % of one or several identical or different fatty acid dimers and/or one or several identical or different fatty acid trimers; and
- 0 to 49 weight % of one or several identical or different fatty acid monomers and/or one or several identical or different fatty acid higher oligomers.

As used herein, a higher fatty acid oligomer has a larger molecular weight than the correspondent fatty acid trimer. Typically, they are the tetramers, pentamers, etc. of the fatty acid.

The hydrogen bonds in the supramolecular polymer take place between two identical or different functions chosen between those shown in (1*) to (6*). The carbon atoms in the formulae (1*) to (6*) may be substituted.

Certain molecules having at least a functional group from (1*) to (4*) correspond to the reaction of urea with a component comprising NH₂ or NH functions separated by 2 or 3 carbon atoms, more precisely, from the reaction of urea with alkylene amines, amines, amino alcohols or amido amines. Examples of the result of the reaction of urea with a polyalkylamine are the:
- UDETA: 2-aminoethylimidazolidin-2-one or 1-(2-aminoethyl)imidazolidin-2-one, coming from the reaction of urea and diethylene triamine (DETA);
- UTETA: 1-(2-[(2-aminoethyl)amino]ethyl)imidazolidin-2-one, coming from the reaction of urea and triethylene tetramine (TETA);
- UTEPA: 1-(2-{2-[(2-aminoethylamino]ethyl}amino)ethyl]imidazolidin-2-one, coming from the reaction of urea and tetraethylene pentamine (TEPA).

Other examples of molecules with structure as those shown in (1*) to (4*) are those from the reaction of urea or thio-urea with:
- various polyamines such as dipropylene triamine, di (1,2-butylenes) triamine, di (2,3-butylenes) triamine, N-methyldiethylenetriamine, N-ethyldiethylenetriamine and tripropylenetetramine;
- amino alcohols such as 2-[(2-aminoethyl)amino]ethanol.

Among the molecules with the structure as shown in (5*), an example is 4-amino-1,2,4-triazole. Among the molecules with formula (6*), an example is 3-amino-1,2,4-triazole.

Examples of fatty acids that may be used for this reaction are the saturated or unsaturated carboxylic acids with at least 5 carbon atoms such as linear monoacids like lauric, mystiric, oleic, stearic, linoleic or linolenic acids, branched monoacids like 2-ethyl hexanoic acid, linear diacids such as glutaric, adipic, pimelic, suberic, azelaic, sebacic, undecanedioic, dodecanedioic, brassylic, tetradecanedioic, pentadecanedioic, thapsic, or octadecanedioic acids, branched diacids like 3,3-dimethylglutaric acid and more preferably the dimer and trimer containing fatty acid mixtures resulting from the oligomerization of unsaturated fatty acids from vegetal origin such as undecylenic, myristoleic, palmitoleic, oleic, linoleic, linolenic, ricinoleic, eicosenoic or docosenoic acids (found on pine, corn, sunflower, soja, raisin seeds, linen or jojoba) or animal origin like eicosapentaenoic or docosahexaenoic acids (found in fish oils).

As preferred examples of fatty acids, mention may be made of the fatty acids comprising unsaturated molecules, for example of the oleic type that is oligomerized by a condensation reaction of the double bonds. This reaction results in blends that essentially comprise dimers and trimers. By fatty acid dimers and trimers it is understood the oligomers of 2 or 3 identical or different monomers. Advantageously, these fatty acids, saturated or unsaturated, comprise 12 to 100 carbon atoms and more advantageously 24 to 90.

Blends of fatty acids oligomers comprise, in general, a given ratio of fatty acid dimers and trimers. The proportion of fatty acid monomer and higher oligomers (tetramers, pentamers, etc...) is low in comparison of the proportion of fatty acid dimers and trimers. Additionally, the dimer/trimer ratio of a fatty acid blend have an influence over the supramolecular polymer used in the invention, such as the amount of crystallinity and the crystallization kinetics.

Examples of a fatty acid dimer and a trimer are shown below, representing the cyclic dimer and trimer from the fatty acid with 18 carbon atoms, C₁₈. It is to be noted that the commercial products are blends of isomers of such compositions, including also partially or totally hydrogenated structures.

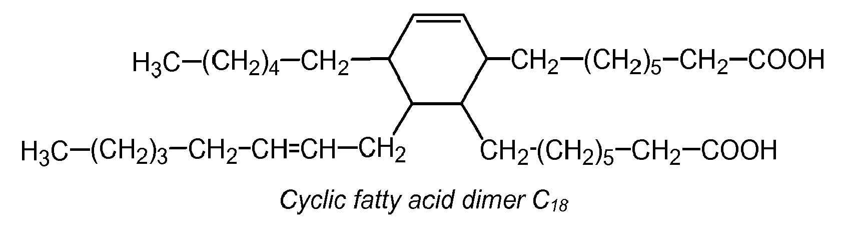

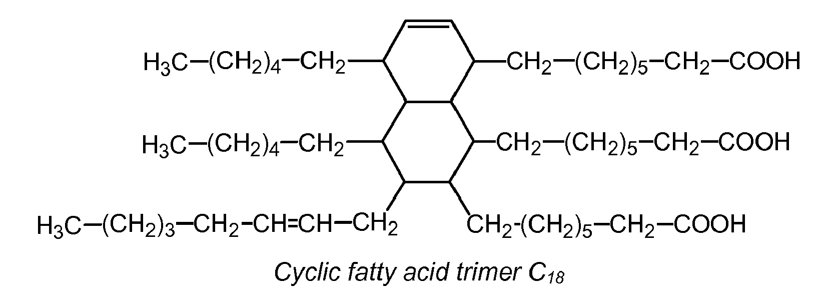

A preferred blend of fatty acid oligomers contains dimers, trimers and monomers of the C₁₈ fatty acid (linear of cyclic), with a major composition of dimer and trimers and a minor composition of monomer.
A still preferred blend comprises:
- 0.1 to 40% in weight, more preferably from 0.1 to 10 wt% of identical or different fatty acid monomers;
- 0.1 to 99.8% in weight, more preferably from 18 to 98 wt% of identical or different fatty acid dimers; and
- 0.1 to 85% in weight, more preferably from 2 to 70 wt% of identical or different fatty acid trimers.

Commercial examples of such dimer and trimer fatty acid mixtures are: the Uniquema products Pripol^{®} 1017, Pripol^{®} 1048, Pripol^{®} 1013, Pripol^{®} 1040, Pripol^{®} 1009 and Pripo^{®} 1006, the Arizona chemicals products Unidyme^{®} 60, Unidyme^{®} 40 and Unidyme^{®} 14, the Cognis products Empol^{®} 1008, Empol^{®} 1018, Empol^{®} 1043, Empol^{®} 1045, Empol^{®} 1016 and the products from Oleon, such as Radiacid^{®} 0980. These products, Pripol^{®}, Unidyme^{®}, Empol^{®}, and Radiacid^{®}, comprise fatty acid monomers of C₁₈ and fatty acid oligomers multiples of C₁₈.

The supramolecular polymers used in the bituminous composition of the present invention may also result from the reaction of compounds with formulae (1*) to (6*) with a fatty acid derivate such as a fatty acid ester or fatty acid chloride. A preferred fatty acid ester is a fatty acid methyl ester, in particular a fatty acid methyl ester of a fatty acid dimer or a mixture of fatty acid oligomers as described above. An example of a fatty acid chloride can be the sebacoyle chloride.

As an example of a semi-crystalline supramolecular polymer used in the bituminous composition in step (1) of the present invention, mention may be made of the polymer with the following structure, which is obtained from the reaction of a fatty acid dimer and UDETA:

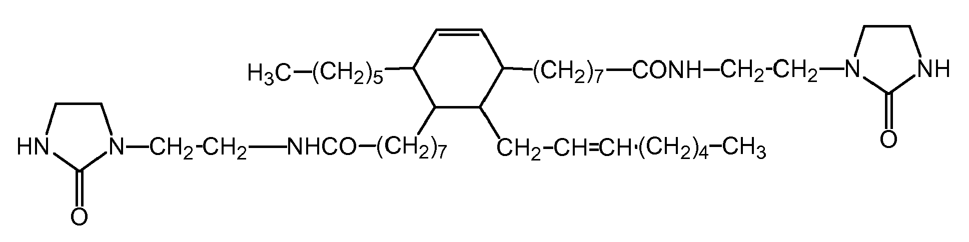

Other examples of supramolecular polymers used in this invention are:
- the Supra 1008, obtained from the reaction of Empol^{®} 1008 and UDETA;
- the Supra 1060, obtained from the reaction of Unidyme^{®} 60 and UDETA;
- the Supra 1008/1060, obtained from the reaction of Empol^{®} 1008, Unidyme^{®} 60 and UDETA;
- the Supra 1017, obtained from the reaction of Pripol^{®} 1017 and UDETA;
- the Supra 1040, obtained from the reaction of Pripol^{®} 1040 and UDETA;
- the Supra 1048, obtained from the reaction of Pripol^{®} 1048 and UDETA;
- the Supra 1014, obtained from the reaction of Unidyme^{®} 14 and UDETA;
- the Supra 0980, obtained from the reaction of Radiacid^{®} 0980 and UDETA.

Another variable in the synthesis of the supramolecular polymer that may be used in this invention, which generally influences the thermomechanical properties of the supramolecular polymer as well as the bituminous compositions containing it, is the stoichiometric proportion between molecules (1*) to (6*) and the fatty acid blends. For example, in the case of the UDETA molecule, the number of reactive amine groups with the fatty acids can be adjusted to be in stoichiometric proportions, meaning one amine (or UDETA molecule) for each acid group in the fatty acid or in non-stoichiometric proportions, meaning an excess or shortage of amine (UDETA molecules) for each acid group. As an example, the ratio between the number of compounds with formula (1*) and the number of acid groups in the fatty acid monomers, dimers or trimers is between 0.5 and 2.

The preferred supramolecular polymers that may be preferentially used in the bituminous compositions described in this invention, are the result from the reaction of UDETA and a mixture of fatty acids (containing dimers and trimers), and generally are of a semi-crystalline nature with melting temperatures from about 30°C to 150°C and a glass transition temperature of between -50°C and 30°C.

Bituminous compositions comprising non-crystalline supramolecular polymers with elastic properties such as described in WO 2006/087475 may be also part of the bituminous compositions described in this invention.

To the bituminous compositions of this invention, may be added before or after step (1) of the present invention a supramolecular structure formed by the assembly through physical bonds of conventional polymers upon which at least an average of one hydrogen-bonding functional group per conventional polymer molecule is grafted. The conventional polymer may be linear, branched or chemically crosslinked. By conventional polymers it is understood for the purpose of the present invention, those formed by molecules comprising two or more repeat units, whether identical or not, linked by covalent bonds, and having a molecular weight of at least 500 daltons. Preferably the grafted hydrogen-bonding functional group in such conventional polymer comes from the grafting upon it of UDETA.

To the bituminous compositions used in the preparation process of the present invention may also be added one or more further additives commonly used in the art. Such additional additives may be added at any time during the hereinbefore-described preparation process, i.e. during any of step (1) and/or step (2) and/or step (3) and/or step (4).
Such further additives are advantageously chosen from among polymers generally used in order to improve the mechanical performance of the bitumen and the mixture, paraffins, for example Fischer-Tropsch paraffins described in US 6,588,974, fluxants, esters of fatty acids and functionalized wax, dialkyldiamides as for example those cited in WO 2007/73378, phosphoric acid, superphosphoric acid, polyphosphoric acid, fluxants oils from vegetal or mineral sources and derivatives thereof, as well as mixtures of two or more of the above additional additives.
Non-limiting examples of polymers generally used in order to improve the mechanical performance of the bitumen and the mixture, i.e. commonly used in the modification of bitumen are: styrene butadiene rubbers, styrene/butadiene block copolymers, ethyl vinyl acetate copolymers, polyethylene and other alpha-polyolefins (as disclosed in "Asphalt binder testing manual", Asphalt Institute 2007).

The bituminous compositions described in this invention may be stored in any kind of container, such as storing tanks, fix or mobile (truck, train or boat), where the temperature can be maintain within appropriate values, for example within the limits described in NF EN 13108-1, February 2007 and/or Asphalt binder testing manual, Asphalt Institute 2007, according to each type of bitumen. The given temperature during storage may be kept continuously or in intervals, provided the total storing time at appropriate temperature is within the limits of step (2) of the process of the present invention.

After the described storing time described in the step (2), and the optional steps (3) and (4) of the process of the present invention, the stored bituminous composition is mixed with mineral aggregates to produce an asphalt mixture.

The present invention also relates to the use of at least one additive ADD1 as hereinbefore described, preferably (A) to (N), optionally with at least one component capable of forming a supramolecular assembly as described above, for the preparation of a bituminous composition to be stored at a standard temperature according to the class of bitumen (as described for example in NF EN 13108-1, February 2007 or Asphalt binder testing manual, Asphalt Institute 2007), between 100°C and 260°C, preferably between 100 and 200°C, for a period of time longer than 2 days, preferably between 3 and 30 days, and more preferably between 7 and 30 days;

According to still another object, the present invention relates to a bituminous composition comprising at least one additive ADD1, and optionally at least one component capable of forming a supramolecular assembly, as hereinbefore described and stored at a temperature between 100°C and 260°C, preferably between 100 and 200°C for a period of time longer than 2 days, preferably between 3 and 30 days, and more preferably between 7 and 30 days.

The mineral aggregates used to fabricate asphalt mixtures according to the process of the present invention are not limited in chemical nature, shape or size and may be the products from quarries, aggregates recuperated from previous asphalt mixtures (reclaimed asphalt pavement, RAP for example defined in the French Standard AFNOR XP P98-135 of December 2001), products from building demolition and mixtures of any of the above. Asphalt mixtures prepared with at least one bituminous composition prepared according to the preparation process of the present invention may comprise other common components of asphalt mixtures such as organic fibers (for example: cellulose, cotton, polypropylene, polyester, polyvinyl alcohol and polyamide fibers) and/or inorganic fibers (for example: glass, metal or carbon fibers).

The preparation process described in this invention can be applied to any asphalt mixture production methods such as those employing bituminous emulsion addition, anhydrous bituminous addition, or any of the several processes for warm or semi-warm mixture production (where production temperature is above room temperature but below that in regular hot mixing process), for example as described in US 5,910,212 and WO 97/20890 which uses a hard bituminous binder combined to the mixture of a soft bituminous binder and aggregates, or in US 2005/0076810 which uses a high desorption capacity additive, or in EP 1 469 038 in which a part of the aggregates is heated and dried and mixed with bitumen and then after mixed with wet aggregates, or else in US 2006/00236614 in which the aggregates are dried and mixed with bitumen but with the drying step, so that a fraction of the initial humidity of the aggregates remains, or also in WO 07/112335 which uses a water in oil bitumen dispersion with selected surfactants.

The present invention is particularly advantageously in the production of asphalt mixtures by any of the several processes for warm or semi-warm mixture production as described above. It has been surprisingly found that the process of the present invention leads to asphalt mixtures with improved properties, comprising but not limited to, enhanced workability and ease of compaction. Such improved properties result in improved performances of the before mentioned warm or semi-warm asphalt mixture production techniques. The process of the present invention therefore reflects in more robust warm or semi-warm mixtures, which consequently may further allow workability at lower mixing and compaction temperatures used in the preparation of such asphalt mixtures.

The reduction in the production temperature by using the bituminous compositions obtained according to the process of the present invention has many advantages, among which a reduction in the consumed energy during asphalt mix production since the mineral aggregates do not have to be heated as much as in the production with regular bitumen. In addition, this reduction of energy also implies a reduction in CO₂ and other greenhouse effect gas emissions.

The main application for the asphalt mixture preparation process described in this invention is the construction of a rolling surface, such as roads, parking lots, bridges, motorways, highways, airport runaways or any similar rolling surface, and also any surface requiring bituminous or asphalt coating, such as pavements, side walks, playgrounds and the like.

It has been surprisingly discovered that surfaces coated with asphalt mixtures, wherein the bituminous composition was stored according to the process of the present invention, have improved properties, mainly because of the void % is decreased as compared to asphalt mixtures comprising a bituminous composition that has not been stored for a period longer than 2 days.

According to another object, the present invention also relates to a surface, preferably a rolling surface, comprising at least one bituminous composition obtained by the preparation process of the present invention, characterized in that the void % is decreased as compared to asphalt mixtures comprising a bituminous composition that has not been stored for a period longer than 2 days.

The invention is further illustrated with the following examples, which do not limit the present invention, the protection scope of which is defined by the annexed claims.

### Examples

### Example 1

A dynamic shear rheometer (Physica M301) was used to determine the viscosity of bituminous compositions containing additives for the reduction of the production temperature as a function of storing time. Measurements were taken at 160°C at a shear rate of 100 s⁻¹. The additive used, A1, is a 50/50 weight % mixture between a copolymer of ethylene and propylene oxide, with a molar mass of about 3,000 g/mol and a mass polyethylene oxide/ polypropylene oxide ratio of 0.25 with the result of the condensation reaction of a polyethylene polyamine with a vegetal oil that comprise fatty chains with 14 to 18 carbon atoms. The additive A1 was added at a concentration of 0.3 weight % into a bitumen with a penetration grade of 35/50 (Azalt, TOTAL) at 160°C and mixed with a mechanical agitator for 15 min. The bitumen and additive composition was stored at 160°C in a well-closed can for 1 week. Samples of the bituminous composition were taken just after addition of the additive, and 3 and 7 days later. Table 1 shows the viscosity values obtained for the bituminous compositions at different storing times (0, 3 and 7 days). A pure 35/50 bitumen reference is also added for comparison. It can be observed that the addition of additive A1 does not modify the viscosity of the bitumen in a significant way. In particular, no decrease in viscosity is observed even after 7 days of storage.

**-- Table 1 --**

| | Viscosity 0 days (Pa.s) | Viscosity 3 days (Pa.s) | Viscosity 7 days (Pa.s) |
|---|---|---|---|
| Pure bitumen | 0.155 | 0.157 | 0.160 |
| Bitumen + A1 0.3% | 0.154 | 0.153 | 0.168 |

The absence of variation of the viscosity, or almost no variation of the viscosity indicates that the enhanced workability obtained by the process of the present invention does not result from a modification of the bitumen characteristics, namely a reduction of viscosity. On the contrary, a reduction in the viscosity of the bitumen upon addition could be detrimental to the final mechanical properties of the asphalt mixture, for example the resistance to deformation under the traffic (rutting resistance).

### Example 2

An asphalt mixture using the procedure described in this invention was produced on a discontinuous plant. A specific asphalt mixture named BBSG 0/10 in France (Béton Bitumineux Semi-Grenu) was produced using the following formula:

| | |
|---|---|
| Calcareous filler | 1.5% |
| Sand 0/4 | 48.5% |
| Aggregates 4/6 | 14% |
| Aggregates 6/10 | 36% |

The bitumen used was the same as that for example 1. Bitumen content was 5.6 g for 100 g of mineral formula described above. Two lanes were made, both using a bituminous composition including the additive A1 at 0.3 wt%, as described in example 1. In one case, the bituminous composition was prepared just before the asphalt mixture production while in the other case it was stored for 7 days in another storing tank at 160°C. The additions of the additive were carried out in the same way, directly into the storing tank with 2 hours of pumping in closed circulation in order to achieve a good mixing of the additive into the bitumen (the stored bitumen was pumped also 2 hours before the asphalt mixture production). In both case, a bitumen temperature of 160°C was used during asphalt production while the mineral aggregates were heated to ∼135°C.

The laying off and compaction was carried out in the same way for both lanes. A Titan 5820 paver at a speed of 5 m/min and a BW170AV asphalt manager compactor roller, which did 10 passes at a frequency of 45 Hz, were used. During the laying off operation it was noted that the asphalt mixture made with a stored bituminous composition was easier to work by hand (when moving and placing by shoveling) than with the non-stored one.
The apparent volumetric masses of the two lanes were measured with a gamma densimeter following the NF P 98-241-1 norm. The void % for each lane was calculated from the resulting apparent volumetric mass (see Table 2 below). A significant reduction of the void % was observed when the stored bituminous composition according to the invention was used, clearly demonstrating that the workability is increased when using the process described in the present invention.

**-- Table 2 --**

| | T of asphalt mix production (°C) | T of asphalt mix compaction (start) (°C) | Void % (average) |
|---|---|---|---|
| Asphalt mix with non-stored bituminous composition | 135 | 120 | 5.9 |
| Asphalt mix with stored bituminous composition | 135 | 120 | 5.6 |

### Example 3

Cohesion test using the procedure described in this invention were carried out in the laboratory following the NF EN 12694-23 following the same formula as in example 2. Two additives were tested at 0.3 wt% with respect to the total weight of the bitumen, additive A1 and another one, B1, also at 0.3 wt% with respect to the total weight of bitumen. Additive B1 has the following structure: 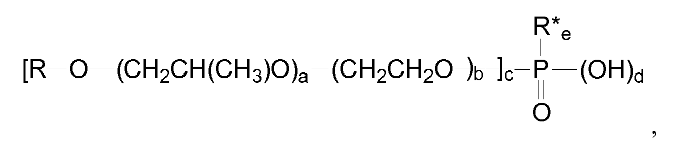 where P represents phosphorus, c is 1 or 2, e is 0 or 1, c + d + e is 3, provided that when c is 2, then e is 0, R* is hydrogen or linear or branched C₁-C₆ alkyl, a is 0, b is 4, and R represents a linear hydrocarbon chain with 16 to 18 carbon atoms.

Addition of the additives into the bitumen was carried out as described in Example 1. Additive B1, as additive A1 in example 1, is also added into a bitumen with a penetration grade of 35/50 (Azalt, TOTAL) at 160°C and mixed with a mechanical agitator for 15 min. The mineral formula and bitumen content was the same as those used in example 2. Asphalt mixtures were produced at 120°C, with bituminous compositions that were stored in an oven at 160°C for several days (7 days samples used).
The resulting asphalt mixture was compacted, after a cooling period of ∼25 min, using a gyratory press at 100°C under 6 bar for 40 gyrations. The void % was calculated for all samples after compaction. The compacted sample was then cooled down and kept at constant temperature (20°C) for 24 hours before testing. A reference sample using pure bitumen was also done in an identical manner. In addition, a reference with pure bitumen was carried out in an standard manner, with a production and compaction temperature of 160°C. Indirect tensile tests measurements were carried out on all samples using an Instron universal testing machine on compression at a 50 mm/min rate. Values for the maximal strength obtained from the compression curves are shown in Table 3.

**-- Table 3 --**

| | Max Force in fracture (kN) |
|---|---|
| Reference produced and compacted at 160°C | 27.9 |
| Reference produced at 120°C and compacted at 100°C (0 days) | 26.1 |
| Reference produced at 120°C and compacted at 100°C (7 days) | 27.4 |
| Asphalt mixture produced at 120°C with additive A1, compacted at 100°C (0 days) | 26.9 |
| Asphalt mixture produced at 120°C with additive A1, compacted at 100°C (7 days) | 32.8 |
| Asphalt mixture produced at 120°C with additive B1, compacted at 100°C (0 days) | 28.8 |
| Asphalt mixture produced at 120°C with additive B1, compacted at 100°C (7 days) | 32.6 |

It can be observed when comparing the fracture strengths of the different samples that the additives A1 and B1 have already a beneficial impact on the properties even without storage. An improvement in the quality of the mineral aggregate coverage can be readily observed in the samples with additives A1 and B1.

However, after storing the bituminous composition for 7 days in the oven at 160°C, and further improvement of the properties is observed. Increments on the fracture strength between 13% and 22% are obtained when the process described in this invention is applied. These increments are far superior than the ones observed on the reference sample without additive produced at 120°C, where only an increase of 5% is achieved (probably related to the aging of bitumen), which remains lower than the value for the reference sample produced at 160°C.

## Claims

1. Preparation process of an asphalt mixture comprising at least the steps of:
(1) preparing a bituminous composition by the addition to at least one bitumen of at least one additive, hereafter referred as additive ADD1, at a temperature of between 100 and 260°C, preferably between 100 and 200°C;
(2) storing said bituminous composition at a standard temperature according to the class of bitumen (as described for example in NF EN 13108-1, February 2007 or Asphalt binder testing manual, Asphalt Institute 2007) for a period of time longer than 2 days, preferably between 3 and 30 days, and more preferably between 7 and 30 days;
(3) optionally adding at least another additive ADD2, to the stored bituminous composition from step (2);
(4) optionally further storing the resulting bituminous composition from step (3) for less than 15 days, preferably 7 days, more preferably less than 3 days;
(5) mixing the obtained bituminous composition of step (4) with mineral aggregates to produce an asphalt mixture.

2. Preparation process according to claim 1, wherein the standard temperature in step 2 ranges between 100° and 260°C, preferably between 100 and 200°C.

3. Preparation process according to claim 1 or claim 2, wherein the standard temperature in step 2 is within the ranges of:
• 160°C to 200°C for bitumen type 20/30;
• 155°C to 195°C for bitumen type 30/45;
• 150°C to 190°C for bitumen type 35/50 or 40/60;
• 140°C to 180°C for bitumen type 50/70 or 70/100;
• 130°C to 170°C for bitumen type 100/150 or 160/220; and
• 120°C to 160°C for bitumen type 250/330 or 330/430.

4. Preparation process according to any of claims 1 to 3, wherein ADD1 is chosen from among one or more of the following additives:
• A) an additive containing at least a component A1 of formula: 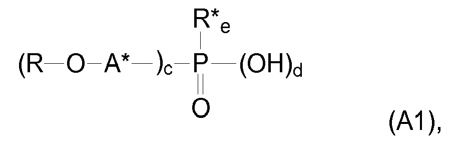 where P represents phosphorus, c is 1 or 2, e is 0 or 1, c + d + e is 3, provided that when c is 2, then e is 0, R* is hydrogen or linear or branched C₁-C₆ alkyl, A* represents a bond or a divalent group containing at least a propylene oxide repeating unit (PO) and/or a ethylene oxide repeating unit (EO) and R is a linear, branched, saturated or unsaturated C₁-C₃₀ hydrocarbon chain, optionally containing at least one aromatic cycle; the content of additive(s) A1 being comprised between 0.3 kg and 20 kg per ton (1,000 kg) of bituminous composition, preferably, A* represents a divalent group containing propylene oxide (PO) and/or ethylene oxide (EO) repeating units, generally statistically arranged or in blocks, more preferably in blocks, even more preferably, A* represents a divalent group containing propylene oxide (PO) and/or ethylene oxide (EO) repeating units, where such PO and/or EO repeating units are bonded to the phosphorus atom by a single bond or by a linear or branched hydrocarbon chain with, preferably, one, two or three carbon atoms, wherein preferably, the PO and/or EO repeating units are directly bonded to the phosphorus atom (single bond), the oxygen atoms of OP or OE repeating units are bonded to the phosphorus atom;
• B) the reaction product(s) of (di)alk(en)ylphenol(s) with aldehyde(s), said aldehyde(s) having from 1 to 10 carbon atoms (C₁-C₁₀), and more particularly from 1 to 5 carbon atoms (C₁-C₅), and even more particularly paraformaldehyde or acetaldehyde, followed with (poly)oxyethylation and/or (poly)oxypropylation, the alk(en)yl groups having from 1 to 50 carbon atoms (C₁-C₅₀), preferably from 2 to 20 carbon atoms (C₂-C₂₀), and more preferably from 3 to 12 carbon atoms (C₃-C₁₂), the dialk(en)ylphenols possibly being identical or different, the unit resulting from (poly)oxyethylation and/or (poly)oxypropylation having a molecular weight equal to or greater than 45 g/mol and less than 20,000 g/mol, the number of phenolic units in the reaction product B) ranging from 3 to 50;
• C) (poly)oxyethylated and/or (poly)oxypropylated 2,2-bis(4-hydroxyphenyl) propane-epichlorohydrine copolymer(s), the unit resulting from (poly)oxyethylation and/or (poly)oxypropylation having a molecular weight equal to or greater than 45 g/mol and less than 20,000 g/mol;
• D) (poly)oxyethylated and/or (poly)oxypropylated bis(4-hydroxyphenyl)ethane-epichlorohydrine copolymer(s), the unit resulting from (poly)oxyethylation and/or (poly)oxypropylation having a molecular weight equal to or greater than 45 g/mol and less than 20,000 g/mol;
• E) (poly)oxyethylated and/or (poly)oxypropylated bis(4-hydroxyphenyl) methane-epichlorohydrine copolymer, the unit resulting from (poly)oxyethylation and/or (poly)oxypropylation having a molecular weight equal to or greater than 45 g/mol and less than 20,000 g/mol;
• F) the reaction product of (poly)oxyethylation and/or (poly)oxypropylation of an alkyldicarboxylic acid or mixtures thereof, the alkyl groups having from 1 and 20 carbon atoms, preferably from 1 to 10 carbon atoms, all the units resulting from (poly)oxyethylation and/or (poly)oxypropylation having a molecular weight equal to or greater than 100 g/mol and less than 20,000 g/mol;
• G) the reaction product of (poly)oxyethylation and/or (poly)oxypropylation of a fatty acid, the number of carbon atoms of which ranging from 10 and 30, said fatty acid being preferably tall oil fatty acid, the unit resulting from (poly)oxyethylation and/or (poly)oxypropylation having a molecular weight equal to or greater than 100 g/mol and less than 20,000 g/mol;
• H) the reaction product of product B) with a mixture of products F) and G);
• I) a salt from an alk(en)yl(aryl) sulfonic acid(s) and an alk(en)yl(aryl)amine(s), the alk(en)yl(aryl) units having a number of carbon atoms ranging from 6 to 30, said salt preferably being the salt of dodecyl benzene sulfonic acid with tallow amine, or the salt of dodecyl benzene sulfonic acid with cyclohexylamine;
• J) a salt from an alk(en)yl(aryl) sulfonic acid(s) and heterocyclic compound(s), such as those chosen from among morpholine, pyrazine, pyrazoline, pyrazolone, pyridine, pyridine, pyrimidine, pyrrole, pyrrolidine, pyrolidone, pyrroline, toluidine, imidazole, indol, indoline or oxindole, the alk(en)yl(aryl) groups having from 6 to 30 carbon atoms, said salt preferably being the salt of dodecyl benzene sulfonic acid with morpholine;
• K) the statistical or block copolymer(s) of ethylene oxide and propylene oxide with a molecular weight between 500 g/mol and 20,000 g/mol and their mixtures, with a mass ratio (ethylene oxide / copolymer) between 1% and 70%.
• L) a compound of formula: R°-CO-O-(CH₂)₂-N⁺(R₁R₂R₃), X⁻
where R° is a saturated or unsaturated, linear or branched, eventually hydroxylated C₄-C₃₂, preferably C₇-C₂₁ hydrocarbon radical; R₁, R₂, and R₃ are C₁-C₄ alkyl radicals, and X represents halogen (bromine, chlorine, fluorine or iodine) or mesyl (CH₃SO₃⁻⁻); compound L) is preferably obtained by a process
where a fatty acid of formula R°-CO-OH, wherein R° is as defined above, is reacted with a quaternary ammonium compound of formula HO-(CH₂)₂-N⁺(R₁R₂R₃), Cl⁻ where R₁, R₂ and R₃ are as defined above, in the presence of a strong acid of formula HX, X being as previously defined, a particularly preferred form of the additive L) is the reaction product of choline chloride, methane sulfonic acid and oleic acid, resulting in an additive composition comprising: i) 50 to 100 wt% of 9-octadecenoate choline mesylate; ii) 0 to 15 wt% of methyl sulfonic acid; iii) 0 to 40 wt% of residual oleic acid; iv) 0 to 40wt % of residual mesylate chloride, where i) + ii) + iii) + iv) adds to 100 wt% of the additive composition;
• M) a composition of choline bi- and/or tri-esters, non-limiting examples being the reaction products of choline with a n-alkyl chain having with 51 carbon atoms or 19 carbon atoms over a trimer acid-based compound having 54 carbon atoms (M1) or a carboxylic triacid-based compound having 22 carbon atoms(M2). More examples of such components are the di-esters reaction products of choline bearing a C₃₄ (M3) or C₁₉ (M4) alkyl chain, over a C₃₆ dimer acid-based compound or a C₂₁ carboxylic diacid;
and
• N) a compound of formula: R"-O-A"-CO-CH₂-N⁺(R¹R²R³), X- where R" is a C₆-C₄₀, preferably C₁₀-C₃₆, saturated or unsaturated, linear or branched, optionally hydroxylated, hydrocarbon chain; A" represents a divalent radical comprising and preferably consisting of m ethylene oxy -(CH₂-CH₂-O)ₘ- and/or m propylene oxy -(CH₂-CH(CH₃)-O)ₘ- repeating groups, more preferably m ethylene oxy groups, with 1 ≤ m ≤ 30, even more preferably with 1 < m < 30; R¹, R² and R³, identical of different, each represents C₁-C₄ alkyl, and X represents halogen or mesyl; preferably, compound (N) fulfills one or more, more preferably all of the following conditions: R" is a linear C₁₀-C₃₆, preferably C₁₀-C₃₂ hydrocarbon chain; A" represent a divalent radical of 1 to 30 ethoxy repeating groups -(CH₂-CH₂-O)-; R¹, R² and R³, each represents methyl, and X represents mesyl, the compound (N) being preferably obtained by a process where an ethoxylated and/or propoxylated alcohol with a formula, R"-O-A"-H, where R" and A" are as defined above, is reacted with the salt of a betain halide, for example betain chloride, or with a betain mesylate (for example glycine betain of the following formula: HO-CO-CH₂-N⁺(R¹R²R³), CH₃SO₃⁻ where R¹, R² and R³ are as defined above, in the presence of an acid HX, where X is halogen or mesyl.

5. Preparation process according to any of claims 1 to 4, wherein the amount of the additive(s) ADD1 in the bituminous composition of step (1) of the present invention ranges from 0.01% to 20% by weight, preferably from 0.02% to 10% by weight, more preferably from 0.05% to 1% by weight to the total mass of the bituminous composition.

6. Preparation process according to any of claims 1 to 5, wherein ADD2 is chosen from among anti-stripping agents, generally anionic, cationic, zwitterionic or amphoteric surfactants, said anti-stripping agents preferably being chosen from among: phosphated surfactants, sulfonated surfactants, alkyl carboxylic acids, fatty acid esters of quaternary alkanol amines, alkyl amido polyamines, alkyl imidazolines and alkyl imidazo polyamines, the products from the reaction between polyamines and fatty carboxylic acids, the products from the reaction between alkyl polyamines and fatty carboxylic acids, and in a similar manner, the products from the reaction between fatty acids or vegetal oil and diethanolamine, followed by the reaction with polyamines.

7. Preparation process according to claim 6, wherein the amount of ADD2 ranges between 0.01% and 20% by weight to the total mass of the bituminous composition.

8. Preparation process according to any of claims 1 to 7, wherein the bituminous composition include at least one component capable of forming a supramolecular assembly, wherein at least one of the components capable of forming a supramolecular assembly is the result from the reaction between:
(i)a, a functional group with the formula (1*) to (4*) 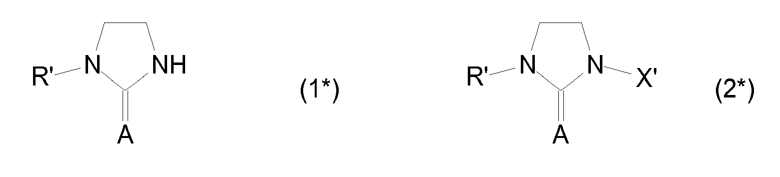 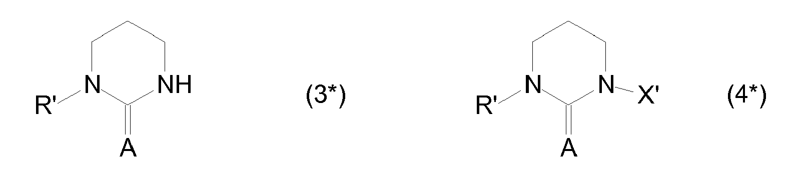 wherein
A is chosen from oxygen, sulfur or NH, preferably oxygen;
X' represents a hydrocarbon group, preferably a substituted or non-substituted, linear or branched alkyl chain;
R' represents a group containing a primary amine, secondary amine or hydroxyl functional group;
or
(i)b, a functional group with formula (5*) or (6*) 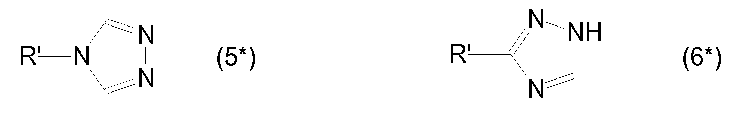 wherein
R' represents a group containing a primary amine, secondary amine or hydroxyl functional group,
with
(ii) at least one fatty acid monomer comprising at least one reactive group, and/or one identical or different fatty acid dimer and/or one identical or different fatty acid trimer or a derivate of a fatty acid such as a fatty acid ester or fatty acid chloride.

9. Preparation process according to claim 8, wherein the at least one a component capable of forming a supramolecular assembly is a supramolecular polymer obtained from the reaction between 2-amino ethyl imidazolidin-2-one and/or 3-amino-1,2,4-triazole, and a mixture of:
• 51 to 100 weight % of one or several identical or different fatty acid dimers and/or one or several identical or different fatty acid trimers; and
• 0 to 49 weight % of one or several identical or different fatty acid monomers and/or one or several identical or different fatty acid higher oligomers.

10. Preparation process according to any of claims 1 to 9, further comprising the addition of one ore more additional additives chosen from among polymers generally used in order to improve the mechanical performance of the bitumen and the mixture, paraffins, fluxants, esters of fatty acids and functionalized wax, dialkyldiamides, phosphoric acid, superphosphoric acid, polyphosphoric acid, fluxants oils from vegetal or mineral sources and derivatives thereof, as well as mixtures of two or more of the above additional additives.

11. Preparation process according to claim 10, wherein the polymer additional additive(s) is(are) chosen from among styrene butadiene rubbers, styrene/butadiene block copolymers, ethyl vinyl acetate copolymers, polyethylene and other alpha-polyolefins.

12. Use of at least one additive ADD1, preferably (A) to (N) as described in claim 4, optionally with at least one component capable of forming a supramolecular assembly as described in any of claims 8 or 9, for the preparation of a bituminous composition to be stored at a standard temperature according to the class of bitumen, between 100°C and 260°C, preferably between 100 and 200°C, for a period of time longer than 2 days, preferably between 3 and 30 days, and more preferably between 7 and 30 days.

13. Bituminous composition comprising at least one additive ADD1, preferably (A) to (N) as described in claim 4, optionally with at least one component capable of forming a supramolecular assembly as described in any of claims 8 or 9, which is stored at a standard temperature according to the class of bitumen, between 100°C and 260°C, preferably between 100 and 200°C, for a period of time longer than 2 days, preferably between 3 and 30 days, and more preferably between 7 and 30 days.

14. Asphalt mixture comprising at least one bituminous composition according to the preparation process according to any of claims 1 to 11, optionally further comprising organic fibers, preferably cellulose, cotton, polypropylene, polyester, polyvinyl alcohol and polyamide fibers, and/or inorganic fibers, preferably glass, metal or carbon fibers.

15. Surface, preferably rolling surface, comprising at least one bituminous composition obtained by the preparation process according to any of claims 1 to 11, **characterized in that** the void % is decreased as compared to asphalt mixtures comprising a bituminous composition that has not been stored for a period longer than 2 days.
